# DEMANDE DE BREVET EUROPEEN

(11) **EP 1 867 890 A2**
(43) Date de publication de la demande: **19.12.2007**
(21) Numéro de dépôt: 07301095.1
(22) Date de dépôt: 08.06.2007
(51) Int. Cl.: F16F 1/38

(54) **Articulation élastique montée en liaison au sol dans un véhicule automobile**

(30) Priorité: 15.06.2006 WO PCT/FR2006/052148
(71) Demandeur: PEUGEOT CITROËN AUTOMOBILES S.A., 78140 Velizy Villacoublay (FR)
(72) Inventeur: Gryz, Gilbert, 93600, Aulnay sous Bois (FR)

(57) **Abrégé**

L'invention concerne une articulation élastique montée dans un véhicule automobile en étant solidaire d'une première pièce en liaison au sol et d'une deuxième pièce du véhicule, et qui est essentiellement caractérisée en ce que la face (5) de la dite articulation (1) qui est susceptible de venir en contact avec l'une de ces deux pièces (3,3a) au cours du fonctionnement du véhicule, a été traitée par flocage.

## Description

L'invention concerne une articulation élastique qui est montée dans un véhicule automobile en étant solidaire d'une première pièce en liaison au sol et d'une deuxième pièce du véhicule.

Dans un véhicule automobile, de nombreuses articulations élastiques en liaison au sol sont utilisées.

En général, ces articulations présentent la forme d'un manchon cylindrique monté sur un axe et sont montées solidaire à une première pièce en liaison au sol et à une deuxième pièce du véhicule.

L'une des parois d'extrémité d'une telle articulation est proche soit de la première pièce en liaison au sol, soit de la deuxième pièce, et est couverte d'une collerette en caoutchouc.

Lors du fonctionnement du véhicule, la collerette peut venir en contact sur la pièce de laquelle elle est située à proximité, mais lorsque ce contact est accompagné d'un frottement, une source de bruit devient perceptible à l'intérieur de l'habitacle du véhicule.

Plusieurs solutions ont déjà été développées pour pallier à ce problème.

L'interface de contact peut être graissée mais la durée de fonctionnement d'un tel système est limitée par le rinçage à l'eau en fonctionnement.

Il est également possible d'enduire la collerette d'un vernis dont le frottement ne provoque pas de bruit, mais la durée de fonctionnement d'une telle surface est limitée par l'usure.

Enfin, des composants lubrifiants peuvent être ajoutés dans la formulation du caoutchouc mais un tel ajout engendre des modifications dans les propriétés du caoutchouc.

L'invention permet de pallier les inconvénients précités en proposant une articulation élastique dont les caractéristiques intrinsèques ne sont pas modifiées mais pour lequel un contact avec une pièce en liaison direct ou indirect au sol ne provoque pas de bruit audible dans l'habitacle du véhicule et ce, pendant une durée acceptable.

A cet effet, l'invention porte sur une articulation élastique montée dans un véhicule automobile en étant solidaire d'une première pièce en liaison au sol et d'une deuxième pièce du véhicule, qui est essentiellement caractérisée en ce que la face de cette articulation qui est susceptible de venir en contact avec l'une de ces deux pièces au cours du fonctionnement du véhicule, a été traitée par flocage.

De préférence, la dite articulation présente la forme d'un manchon cylindrique dont l'une de ces deux d'extrémité est recouverte d'une collerette en matériau élastomère dont la face en regard de la pièce contre laquelle l'articulation est susceptible de venir en contact, a été traitée par flocage.

Avantageusement, la collerette est en caoutchouc.

Selon un mode de réalisation avantageux, les fibres faisant l'objet du flocage sont orientées sensiblement perpendiculairement à la face traitée.

Dans ce cas, de façon préférentielle, les fibres faisant l'objet du flocage sont courtes et réalisées en un matériau favorable au frottement.

En outre, les fibres peuvent être en polyamide ou en PTFE.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue en perspective de l'articulation de l'invention montée dans une chape d'articulation, et
- la figure 2 est une vue en perspective de l'articulation de l'invention de la figure 1.

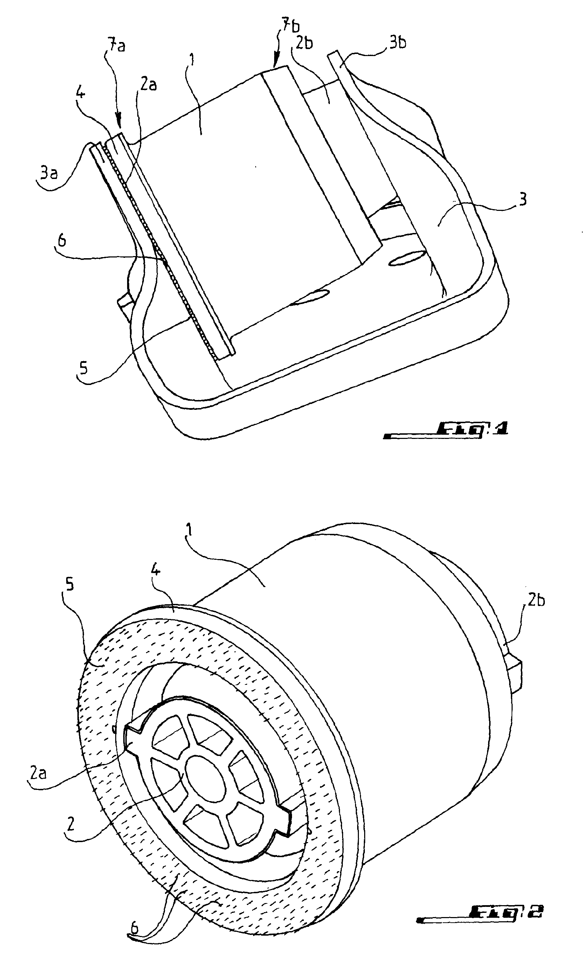

En référence à ces figures, l'articulation élastique 1 de l'invention présente la forme d'un manchon cylindrique monté autour d'un axe 2 fixé transversalement par chacune de ses deux extrémités 2a, 2b à deux parois latérales respectives 3a ,3a d'une chape d'articulation 3 solidaire de la caisse du véhicule automobile non représentée.

L'articulation 1 est également solidaire du train arrière déformable du véhicule par une liaison non représentée sur les figures.

L'une des deux extrémités 7a,7b de cette articulation 1 comporte une collerette en caoutchouc 4 disposée proche et en regard de l'une 3a des deux parois latérales 3a, 3b de la chape d'articulation 3.

La face 5 de la collerette 4 en regard de la paroi de la chape 3a est traitée par flocage de fibres courtes d'une longueur de l'ordre du millimètre et dont la matière facilitera le glissement, par exemple en polyamide, PTFE ou un matériau équivalent.

Un tel traitement permet de modifier la nature de la surface de contact de sorte qu'elle passe de lisse et homogène à chaotique et hétérogène du fait de la présence des fibres 6, de l'air et du passage de l'air entre ces fibres 6.

Ce traitement permet de réduire considérablement les sources aéroacoustiques provenant du contact et du frottement entre la chape d'articulation 3 et la collerette 4 de l'articulation 1 sans modifier les propriétés intrinsèques du caoutchouc de la collerette 4.

Par ailleurs, le procédé de flocage de cette collerette 4, par ailleurs bien connu de l'homme du métier, ne nécessitera pas l'utilisation d'adhésifs de fixation des fibres 6 du fait de la présence du caoutchouc.

La pièce d'articulation de l'invention a été décrite précédemment dans le cadre d'une liaison entre la caisse et le train arrière déformable du véhicule mais peut également s'appliquer à une articulation élastique d'amortisseur, à une articulation élastique de bras et triangles de suspension, à une articulation élastique entre une barre anti-roulis et un bras de suspension, et en particulier des essieux Mac Pherson ou encore à toute articulation le nécessitant.

## Revendications

1. Articulation élastique montée dans un véhicule, notamment un véhicule automobile, en étant solidaire d'une première pièce en liaison au sol et d'une deuxième pièce du véhicule, **caractérisée en ce que** la face (5) de la dite articulation (1) qui est susceptible de venir en contact avec l'une de ces deux pièces (3,3a) au cours du fonctionnement du véhicule, a été traitée par flocage.

2. Articulation élastique selon la revendication 1, **caractérisée en ce qu'**elle présente la forme d'un manchon cylindrique dont l'une (7a) de ces deux d'extrémité (7a,7b) est recouverte d'une collerette en matériau élastomère (4) dont la face (5) en regard de la pièce (3,3a) contre laquelle l'articulation (1) est susceptible de venir en contact, a été traitée par flocage (6).

3. Articulation selon la revendication 2, **caractérisée en ce que** la collerette (4) est en caoutchouc.

4. Articulation élastique selon l'une quelconque des revendications 1 à 3, **caractérisée en ce que** les fibres (6) faisant l'objet du flocage sont orientées sensiblement perpendiculairement à la face traitée (5).

5. Articulation selon l'une quelconque des revendications 1 à 4, **caractérisée en ce que** les fibres (6) faisant l'objet du flocage sont courtes et réalisées en un matériau favorable au frottement.

6. Articulation selon la revendication 5, **caractérisé en ce que** les fibres (6) sont en polyamide ou en PTFE.
